(19) Europäisches Patentamt
European Patent Office
Office européen des brevets

(11) **EP 1 046 886 B1**

(12) **EUROPÄISCHE PATENTSCHRIFT**

(45) Veröffentlichungstag und Bekanntmachung des Hinweises auf die Patenterteilung:
**07.11.2007 Patentblatt 2007/45**

(51) Int Cl.:
***G01F 1/66*** *(2006.01)*

(21) Anmeldenummer: **99107873.4**

(22) Anmeldetag: **21.04.1999**

(54) **Sende- und/oder Empfangskopf eines Ultraschall-Durchflussmessgeräts**

Transmitting and/or receiving transducer of an ultrasonic flowmeter

Transducteur d'émission ou de réception pour un débitmètre à ultrasons

(84) Benannte Vertragsstaaten:
**CH DE DK FR IE LI NL**

(43) Veröffentlichungstag der Anmeldung:
**25.10.2000 Patentblatt 2000/43**

(73) Patentinhaber: **Krohne AG**
**4019 Basel (CH)**

(72) Erfinder:
• **van Bekkum, Aart**
**4223 MG Hoornaar (NL)**
• **Heijnsdijk, Alexander Marnix**
**3356 BW Papendrecht (NL)**
• **Hogendoorn, Cornelis Johannes**
**4261 CK Wijk en Aalburg (NL)**
• **Huijzer, Arie**
**3363 BS Sliedrecht (NL)**
• **Molenaar, Marcel Meijlom**
**3311 LT Dordrecht (NL)**
• **Visser, John C.**
**3362 WE Sliedrecht (NL)**

(74) Vertreter: **Gesthuysen, von Rohr & Eggert**
**Patentanwälte**
**Postfach 10 13 54**
**45013 Essen (DE)**

(56) Entgegenhaltungen:
DE-A- 3 230 631         DE-A- 19 530 807
DE-A- 19 648 784

EP 1 046 886 B1

**Beschreibung**

Die Erfindung betrifft einen Sende- und/oder Empfangskopf eines Ultraschall-Durchflußmeßgerätes für strömende Medien, das nach dem Laufzeit-Verfahren arbeitet, mit einem Gehäuse, mit einem Ultraschallsignale in das strömende Medium aussendenden und/oder aus dem strömenden Medium empfangenden Ultraschalltransducer und mit einem Ultraschallwellenleiter, wobei die Ultraschallsignale über den Ultraschallwellenleiter in das strömende Medium eingekoppelt und/oder aus dem strömenden Medium ausgekoppelt werden.

Der Einsatz von Ultraschall-Durchflußmeßgeräten hat in zunehmendem Maße bei der betrieblichen Durchflußmessung von strömenden Medien, d. h. von Flüssigkeiten und Gasen, an Bedeutung gewonnen. Dabei ist besonders vorteilhaft, daß - wie auch beispielsweise bei magnetisch-induktiven Durchflußmeßgeräten - die Durchflußmessung "berührungslos", d. h. ohne störende Einbauten in der Strömung, erfolgen kann.

Bei Ultraschall-Durchflußmeßgeräten unterscheidet man hinsichtlich des Meßverfahrens vor allem zwischen dem Laufzeit-Verfahren und dem Doppler-Verfahren. Dabei ist die zu erreichende Genauigkeit beim Laufzeit-Verfahren wesentlich größer als beim Doppler-Verfahren. Aus diesem Grund werden bevorzugt Ultraschall-Durchflußmeßgeräte, die nach dem Laufzeit-Verfahren, und zwar insbesondere nach dem Laufzeit-Differenz-Verfahren arbeiten, eingesetzt.

Die Laufzeit eines Ultraschallsignals auf dem Meßpfand von dem sendenden Ultraschalltransducer zu dem empfangenden Ultraschalltransducer in einer Flüssigkeit ergibt sich aus der Schallgeschwindigkeit und der Strömungsgeschwindigkeit der Flüssigkeit bzw. des Gases (Mitführung). Daraus ist das in Rede stehende Prinzip der Ultraschall-Durchflußmessung nach dem Laufzeit-Verfahren abgeleitet. Beim Laufzeit-Differenz-Verfahren werden in der Flüssigkeit bzw. in dem Gas Ultraschallsignale wechselweise oder gleichzeitig stromaufwärts und stromabwärts gesendet. Wegen der unterschiedlichen Ausbreitungsgeschwindigkeiten erreichen die Signale bei gleich langem geometrischen Meßpfad stromaufwärts und stromabwärts die als Empfänger arbeitenden Ultraschalltransducer nach unterschiedlichen Laufzeiten. Die Laufzeit-Differenz der beiden Schallwellen ist direkt proportional zur Durchflußgeschwindigkeit des strömenden Mediums.

Zur Ultraschall-Durchflußmessung eines strömenden Mediums benötigt man funktionsnotwendig ein das strömende Medium führendes Meßrohr und mindestens einen Ultraschalltransducer, vorzugsweise zwei in Strömungsrichtung gegeneinander versetzt angeordnete Ultraschalltransducer sowie eine Steuer- und Auswerteschaltung zur Bestimmung der Laufzeit der Ultraschallsignale. Die Steuer- und Auswerteschaltung kann darüber hinaus aus der Laufzeit die Strömungsgeschwindigkeit und das Durchflußvolumen oder auch andere Parameter des strömenden Mediums berechnen.

Da sich der Einsatz von Ultraschall-Durchflußmeßgeräten aufgrund ihrer hohen Genauigkeit und Betriebssicherheit äußerst bewährt hat, erschließen sich diesen Durchflußmeßgeräten in neuerer Zeit vielfach weitere Einsatzfelder. Dabei spielen insbesondere Einsatzfelder eine Rolle, in welchen das strömende Medium deutlich erhöhte Temperaturen aufweist. Hier sei nur beispielhaft der Einsatz im Bereich der Erdöl- und Erdgasförderung erwähnt.

Hohe Temperaturen stellen jedoch ein erhebliches Problem bei der Anwendung von Ultraschall-Durchflußmeßgeräten dar. In der Regel werden Piezokristalle als grundlegendes Bauteil der Ultraschalltransducer eingesetzt, wodurch sich jedoch die Einsatzmöglichkeiten der bekannten Durchflußmeßgeräte auf einen Temperaturbereich bis maximal 150 °C beschränken. Bei höheren Temperaturen werden die verwendeten Piezokristalle störanfällig bzw. gänzlich funktionsuntauglich.

Aus der JP 61-93 914 A, von der die Erfindung ausgeht, ist ein Ultraschall-Durchflußmeßgerät bekannt, bei dem der Ultraschalltransducer die Ultraschallsignale über einen Ultraschallwellenleiter in das strömende Medium eingekoppelt. Bei diesem bekannten Ultraschall-Durchflußmeßgerät wird versucht, die maximal zulässige Temperatur des strömenden Mediums dadurch zu erhöhen, daß der Ultraschalltransducer nicht direkt mit dem strömenden Medium in Kontakt tritt, sondern ein Ultraschallwellenleiter zwischen dem strömenden Medium und dem Ultraschalltransducer angeordnet ist. Nachteilig bei einer solchen Konstruktion ist jedoch zum einen die sehr große Abklingzeit der Ultraschallsignale, bedingt durch die starken Reflexionen der Ultraschallsignale an den Grenzflächen des Ultraschallwellenleiters, und zum anderen die große Gefahr eines Übersprechens des Ultraschallsignals vom Ultraschallwellenleiter zum Meßrohr und zum Gehäuse. Darüber hinaus wird ein großer Teil der akustischen Energie des von dem Ultraschalltransducer abgestrahlten Ultraschallsignals am Übergang des Ultraschallwellenleiters zum strömenden Medium in den Ultraschallwellenleiter zurück reflektiert. Der durch die unterschiedlichen Impedanzen von Ultraschallwellenleiter und strömenden Medium bedingte sehr geringe Transmissionsgrad des Ultraschallsignals verhält sich proportional zur Impedanz und umgekehrt proportional zur Temperatur des strömenden Mediums. Soll also beispielsweise der Durchfluß eines heißen strömenden Gases bestimmt werden, so ist bei den bekannten Ultraschall-Durchflußmeßgeräten die in das Gas eingekoppelte akustische Leistung zu gering, um von dem zweiten Ultaschalltransducer empfangen werden zu können, - da die Impedanz des heißen Gases sehr gering ist.

Der Erfindung liegt folglich die Aufgabe zugrunde, die bekannten Ultraschall-Durchflußmeßgeräte derart auszugestalten und weiterzubilden, daß die genannten Nachteile vermieden werden und auch bei hoher Temperatur eines strömenden Mediums, insbesondere eines strömenden Gases, der Durchfluß zuverlässig und genau gemessen werden kann.

Die zuvor hergeleitete und aufgezeigte Aufgabe ist erfindungsgemäß durch einen besonders ausgebildeten Sende- und/oder Empfangskopf gelöst, der dadurch gekennzeichnet ist, daß als Ultraschallwellenleiter ein länglicher Schalltrichter mit einem großen Wärmeleitwiderstand vorgesehen ist, daß dem Schalltrichter zumindest teilweise ein vorzugsweise kreiszylindrisches Trichtermantel zugeordnet ist und daß im Trichtermantel eine eine Dissipation der reflektierten Ultraschallwellen im Trichtermantel bewirkende Dämpfung vorgesehen ist. Durch die Verwendung eines Schalltrichters wird zum einen die akustische Energie gebündelt, so daß - auf eine bestimmte Querschnittsfläche bezogen - ein größeres akustisches Signal in das strömende Medium eingekoppelt werden kann. Darüber hinaus wird durch geeignete Dimensionierung des Schalltrichters auch erreicht, daß die Temperatur am Ultraschalltransducer im Vergleich zu der Temperatur des Mediums hinreichend weit abgeklungen ist. Für den Wärmeleitwiderstand des Schalltrichters gilt dabei folgende Gleichung:

$$R=\int_{y=0}^{L}\left[A(y)\lambda(y)\right]^{-1} dy \qquad\qquad (1)$$

wobei A die Querschnittsfläche, L die Länge und λ die Wärmeleitfähigkeit des Schalltrichters ist. Durch geeignete Wahl der Querschnittsfläche A, der Länge L und der Wärmeleitfähigkeit λ kann somit ein Schalltrichter mit einem ausreichend großen Wärmeleitwiderstand R realisiert werden, so daß die maximal zulässige Temperatur am Ultraschalltransducer nicht überschritten wird.

Zu dem erfindungsgemäßen Sende- und/oder Empfangskopfes ist dem Schalltrichter zumindest teilweise ein vorzugsweise kreiszylindrischer Trichtermantel zugeordnet. Im übrigen empfiehlt es sich, den Schalltrichter an dem dem strömenden Medium zugewandten Ende mit einem Fenster abzuschließen und die Ultraschallsignale durch das Fenster in das Medium einzukoppeln und/oder aus dem Medium auszukoppeln. Ist dem Schalltrichter ein Trichtermantel zugeordnet, so sind zweckmäßigerweise der Schalltrichter und der Trichtermantel mit einem Fenster abgeschlossen. Um ein optimales Einkoppeln der Ultraschallsignale in das Medium bzw. Auskoppeln der Ultraschallsignale aus dem Medium zu gewährleisten, ist vorzugsweise das Ende des Schalltrichters in der Mitte des Fensters angeordnet und sind der Durchmesser und die Dicke des Fensters so dimensioniert, daß eine möglichst große Schwingungsamplitude des Fensters erreichbar ist.

Der erfindungsgemäße Sende-und/oder Empfangskopfes ist weiter dadurch gekennzeichnet, daß im Trichtermantel eine Dämpfung vorgesehen ist, wodurch eine Dissipation der reflektierten Ultraschallwellen im Trichtermantel erreicht wird. Diese Überführung der akustischen Energie in Verlustwärme wird noch weiter dadurch erhöht, wenn der Dämpfung fensterseitig eine Impedanzanpassung vorgeschaltet ist. Durch diese Impedanzanpassung werden die unerwünschten Schallreflexionen im Trichtermantel in die Dämpfung eingekoppelt. Durch die Verwendung einer solchen Impedanzanpassung kann die Effektivität der Dämpfung in etwa um den Faktor 2 erhöht werden. Insgesamt wird insbesondere durch die Kombination von Dämpfung und Impedanzanpassung sowohl die Abklingzeit des Ultraschallsignals verkürzt als auch das Übersprechen von Ultraschallsignalen vom Trichtermantel auf das Gehäuse verringert.

Der erfindungsgemäße Sende- und/oder Empfangskopf läßt sich vorteilhafterweise in einem Ultraschall-Durchflußmeßgerät einsetzen, das zwei solcher Sende- und/oder Empfangsköpfe und eine Steuer- und Auswerteschaltung aufweist, wobei die Steuer-und Auswerteschaltung die Laufzeit der Ultraschallsignale zur Bestimmung des Volumendurchflusses mißt. Vorzugsweise wird dabei durch die Steuer- und Auswerteschaltung anhand der Differenz zwischen der Gesamtlaufzeit der Ultraschallsignale zwischen den Ultraschalltransducern und der Summe der Laufzeiten der Ultraschallsignale in den Schalltrichtern der Volumendurchfluß bestimmt.

Im einzelnen gibt es nun eine Vielzahl von Möglichkeiten, den erfindungsgemäßen Sende- und/oder Empfangskopf eines Ultraschall-Durchflußmeßgerätes auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigen

Fig. 1    ein Ausführungsbeispiels eines erfindungsgemäßen Sende- und Empfangskopfes eines Ultraschall-Durchflußmeßgerätes und

Fig. 2    in gegenüber der Fig. 1 vergrößerter Darstellung das dem strömenden Medium zugewandte Ende des in der Fig. 1 dargestellten erfindungsgemäßen Sende- und/oder Empfangskopfes.

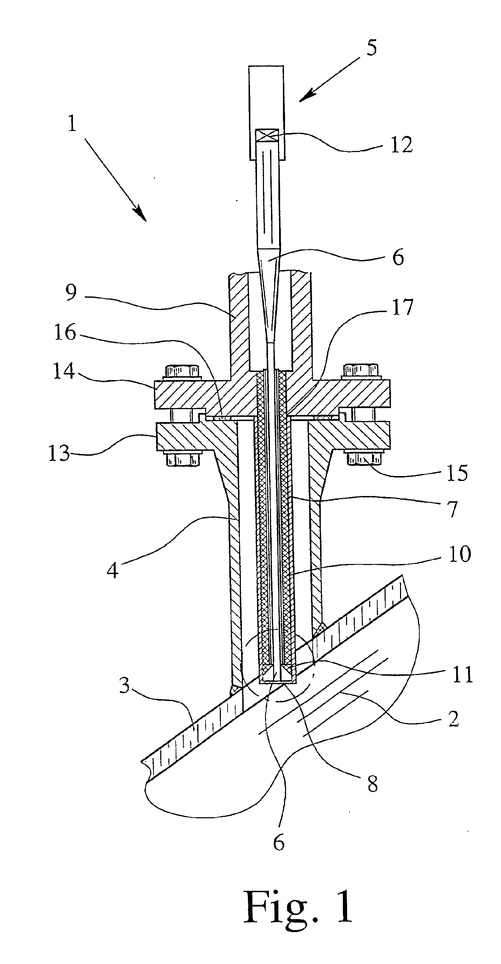

In Fig. 1 ist ein bevorzugtes Ausführungsbeispiel eines erfindungsgemäßen Sende-und/oder Empfangskopfes 1 eines nach dem Laufzeit-Verfahren arbeitenden Ultraschall-Durchflußmeßgerätes dargestellt. Das strömende Medium 2, dessen Durchfluß gemessen werden soll, fließt durch ein in Fig. 1 nur angedeutetes Meßrohr 3. Da Ultraschall-Durchflußmeßgeräte der hier in Rede stehenden Art, also solche, die nach dem Laufzeit-Verfahren arbeiten, vielfach bekannt sind, ist in der Fig. 1 außer dem erfindungsgemäßen Sende- und/oder Empfangskopf 1 von dem Ultraschall-Durchflußmeßgerät nur das Meßrohr 3 angedeutet. Im übrigen wird zur Vermeidung von Wiederholungen in bezug auf Ultraschall-Durchflußmeßgeräte der in Rede stehenden Art auf die deutschen Offenlegungsschriften 195 30 807, 196 33 558 und 196 48 784 verwiesen. Der Offenbarungsgehalt dieser vorveröffentlichten Druckschriften wird hiermit ausdrücklich auch hier zum Offenbarungsgehalt gemacht. Das gilt auch und insbesondere in bezug auf die Steuer- und Auswerteschaltung, wie sie in der deutschen Offenlegungsschrift 195 30 807 beschrieben ist.

Zu dem erfindungsgemäßen, in Fig. 1 dargestellten Sende- und/oder Empfangskopf 1 eines Ultraschall-Durchflußmeßgerätes gehören ein Gehäuse 4, das im dargestellten Ausführungsbeispiel mit dem nur angedeuteten Meßrohr 3 verschweißt ist, ein Ultraschallsignale in das strömende Medium 2 aussendender und/oder aus dem strömenden Medium 2 empfangender Ultraschalltransducer 5 und ein Ultraschallwellenleiter, wobei die Ultraschallsignale über den Ultraschallwellenleiter in das strömende Medium 2 eingekoppelt und/oder aus dem strömenden Medium 2 ausgekoppelt werden.

Die Formulierungen "Sende- und/oder Empfangskopf 1", "in das strömende Medium 2 aussendenden und/oder aus dem strömenden Medium 2 empfangenden" sowie "in das strömende Medium 2 eingekoppelt und/oder aus dem strömenden Medium 2 ausgekoppelt" sind verwendet worden und werden verwendet, weil es nach dem Laufzeit-Verfahren arbeitende Ultraschall-Durchflußmeßgeräte unterschiedlicher Art gibt, und zwar sowohl solche, die nur einen Ultraschalltransducer aufweisen, als auch solche, die zwei oder mehr Ultraschalltransducer aufweisen.

Bei Ultraschall-Durchflußmeßgeräten mit nur einem Ultraschalltransducer arbeitet dieser sowohl sendend als auch empfangend. Für ein solches Ultraschall-Durchflußmeßgerät geht es dann erfindungsgemäß um einen Sende- und Empfangskopf, zu dem - neben einem Gehäuse - ein Ultraschallsignale in das strömende Medium aussendender und aus dem strömenden Medium empfangender Ultraschalltransducer und ein Ultraschallwellenleiter gehören, wobei die Ultraschallsignale über den Ultraschallwellenleiter in das strömende Medium eingekoppelt und aus dem strömenden Medium ausgekoppelt werden.

Bei Ultraschall-Durchflußmeßgeräten, die mindestens zwei Ultraschalltransducer aufweisen, unterscheidet man zwischen solchen, bei denen die Ultraschalltransducer sowohl senden als auch empfangen, und solchen, bei denen mindestens ein Ultraschalltransducer nur sendet und mindestens ein Ultraschalltansducer nur empfängt. Für die Ausführungsform, bei der die Ultraschalltransducer sowohl senden als auch empfangen, gilt das, was zuvor für Ultraschall-Durchflußmeßgeräte gesagt worden ist, die überhaupt nur einen Ultraschalltransducer aufweisen. Für die Ausführungsform, bei der mindestens ein Ultraschalltransducer nur sendet und mindestens ein Ultraschalltransducer nur empfängt, geht es dann erfindungsgemäß um einen Sende- oder Empfangskopf, zu dem - neben dem Gehäuse - ein Ultraschallsignale in das strömende Medium aussendender oder aus dem strömenden Medium empfangender Ultraschalltransducer und ein Ultraschallwellenleiter gehören, wobei die Ultraschallsignale über den Ultraschallwellenleiter in das strömende Medium eingekoppelt oder aus dem strömenden Medium ausgekoppelt werden.

Für die Lehre der Erfindung ist es ohne Bedeutung, ob es im Sinne der zuvor gegebenen Erläuterung um einen "Sende- und Empfangskopf" oder um einen "Sende-oder Empfangskopf" geht.

Für den erfindungsgemäßen, in Fig. 1 dargestellten Sende- und/oder Empfangskopf 1 gilt nun zunächst, daß als Ultraschallwellenleiter ein länglicher Schalltrichter 6 mit einem großen Wärmeleitwiderstand vorgesehen ist. Das, was damit erreicht ist, ist bereits weiter oben beschrieben worden, so daß zur Vermeidung von Wiederholungen darauf verwiesen werden darf.

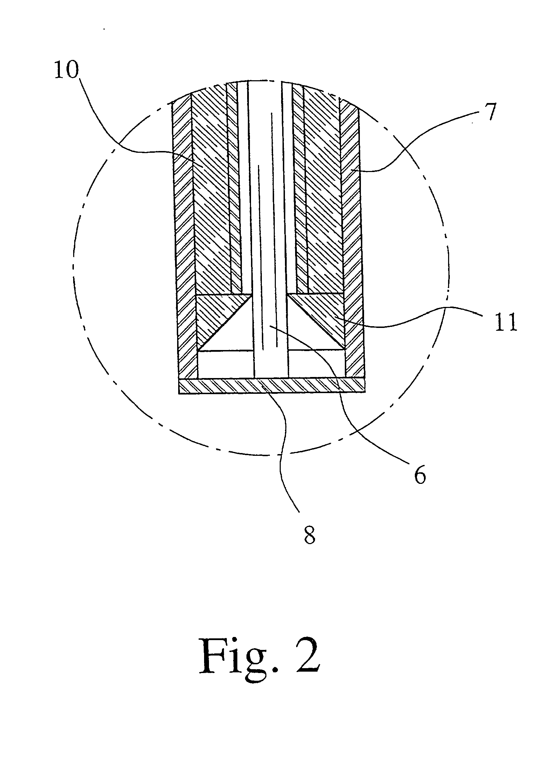

Bei dem dargestellten Ausführungsbeispiel eines erfindungsgemäßen Sende- und/oder Empfangskopfes 1 ist, wie den Figuren, insbesondere der Fig. 2, entnommen werden kann, dem Schalltrichter 6 teilweise ein kreiszylindrischer Trichtermantel 7 zugeordnet. Der Schalltrichter 6 und der Trichtermantel 7 sind an dem dem strömenden Medium 2 zugewandten Ende mit einem Fenster 8 abgeschlossen. Die Ultraschallsignale werden also entweder von dem Ultraschalltransducer 5 über den Schalltrichter 6 und das Fester 8 in das strömende Medium 2 eingekoppelt oder aus dem strömenden Medium 2 ausgekoppelt, nämlich über das Fenster 8 und den Schalltrichter 6 dem Ultraschalltransducer 5 zugeführt. Wie insbesondere die Fig. 2 zeigt, ist das Ende des Schalltrichters 6 in der Mitte des Fensters 8 angeordnet. Im übrigen sind der Durchmesser und die Dicke des Fensters 8 so dimensioniert, daß eine möglichst große Schwingungsamplitude des Fensters 8 erreichbar ist. Im übrigen sei noch darauf hingewiesen, daß das Fenster 8 mit dem Trichtermantel 7 verschweißt sein kann.

In Fig. 1 ist nur angedeutet, daß zu dem Sende- und/oder Empfangskopf 1 noch ein weiteres, das obere Ende des Schalltrichters 6 und den Ultraschalltransducer 5 umschließendes Gehäuse 9 gehört.

Das in Fig. 1 im einzelnen dargestellte Ausführungsbeispiel eines erfindungsgemäßen Sende- und/oder Empfangskopfes 1 ist auch insoweit ein bevorzugtes, und zwar ein besonders bevorzugtes, als im Trichtermantel 7 eine Dämpfung 10 vorgesehen ist, die sich im wesentlichen über die gesamte Länge des Trichtermantels 7 erstreckt und mit dem Trichtermantel 7 verbunden ist. In der Nähe des Fensters 8 ist der Dämpfung 10 noch eine Impedanzanpassung 11 vorgeschaltet. Durch die Impedanzanpassung 11 werden die unerwünschten Schallreflexionen am Fenster 8 besonders effektiv in die Dämpfung 10 eingekoppelt. Vorzugsweise besteht die Impedanzanpassung 11 aus demselben Material wie die Dämpfung 10, so daß an dem Übergang von der Impedanzanpassung 11 zur Dämpfung 10 keine Reflexionen auftreten.

Für die Dämpfung 10 und/oder die Impedanzanpassung 11 wird bevorzugt gesintertes oder poröses Material mit großer Körnung verwendet, da die Effektivität der Schalldämpfung abhängig ist vom Verhältnis der Korngröße zur Wellenlänge. Für die Dämpfung 10 und/oder die Impedanzanpassung 11 kann insbesondere Bronzesand oder Sinterbronze mit einer Korngröße von 10 μm bis 10 mm verwendet werden.

Wie auch im Stand der Technik bekannt, weist bei dem erfindungsgemäßen Sende-und/oder Empfangskopf 1 der Ultraschalltransducer 5 einen Piezokristall 12 auf; die zugeordnete Querschnittsfläche des Schalltrichters 6 entspricht der Querschnittsfläche des Piezokristalls 12.

Die Länge des Schalltrichters 6 richtet sich insbesondere nach dem erforderlichen Wärmeleitwiderstand, wozu auf die weiter oben angegebene Gleichung (1) hingewiesen werden darf; sie ist also abhängig von der maximalen Temperatur des in dem Meßrohr 3 strömenden Mediums 2, liegt jedoch typischerweise in der Größenordnung von 50 mm.

Vorzugsweise haben der Piezokristall 12 und der Schalltrichter 6 an dem dem Piezokristall 12 zugewandten Ende einen Durchmesser von etwa 15 bis 20 mm, während der Schalltrichter 6 an seinem fensterseitigen Ende vorzugsweise einen Durchmesser von etwa 5 mm hat.

Für das dargestellte Ausführungsbeispiel eines erfindungsgemäßen Sende- und/oder Empfangskopfes 1 gilt weiter, wie Fig. 1 zeigt, daß am oberen Ende des Gehäuses 4 ein Flansch 13 und am unteren Ende des Gehäuses 9 ein Flansch 14 ausgebildet sind.

Das Gehäuse 9 wird also über seinen Flansch 14, Schrauben 15 und den Flansch 13 des Gehäuses 4 mit dem Gehäuse 4 verbunden. Zwischen den Flanschen 13 und 14 ist eine Dichtung 16 vorgesehen.

Wie die Fig. 1 zeigt, ist im dargestellten Ausführungsbeispiel der Innendurchmesser des Gehäuses 4 wesentlich größer als der Innendurchmesser des Gehäuses 9 im Bereich seines Flansches 14. Der Trichtermantel 7 stößt an seinem oberen Ende gegen das dem Gehäuse 4 zugewandte Ende des oberen Gehäuses 9. Der hier vorhandene Impedanzsprung führt nun dazu, daß zusätzlich reflektierte Schallsignale in die Dämpfung 10 eingekoppelt werden.

Durch die aus der Dämpfung 10 und der Impedanzanpassung 11 bestehende gute Dämpfung der Ultraschallsignale im Trichtermantel 7 ist die Gefahr des Übersprechens von Ultraschallsignalen vom Trichtermantel 7 auf das Gehäuse 4 stark verringert. Insgesamt können für den erfindungsgemäßen Sende- und/oder Empfangskopf 1 Standardmaterialien verwendet werden, was zu einer kostengünstigen Herstellung eines mit dem erfindungsgemäßen Sende- und/oder Empfangskopfes 1 ausgeführten Ultraschall-Durchflußmeßgerätes führt.

Fig. 2 zeigt eine vergrößerte Darstellung des dem strömenden Medium 2 zugewandten Endes des Schalltrichters 6 und des Trichtermantels 7. Durch die zentrale Anordnung des Schalltrichters 6 bezüglich des Fensters 8 wird eine maximale Schwingungsamplitude des Fensters 8 erreicht, da die abgestrahlte akustische Energie $\Pi_{ac}$ proportional zum Quadrat der Schwingungsamplitude u(s) ist, gemäß folgender Gleichung:

$$\Pi_{ac} = \frac{1}{2} \iint\limits_{S} u^2(s) R_r(s) ds \qquad (2)$$

wobei $R_r(s)$ der Abstrahlwiderstand der Fläche S und u(s) die Schwingungsamplitude ist; folglich wird auch ein Maximum der in das strömende Medium 2 eingekoppelten akustischen Energie erreicht.

Das Fenster 8, welches mit dem Trichtermantel 7 verschweißt ist, besteht in der Regel aus demselben Material wie der Trichtermantel 7. Sowohl für den Trichtermantel 7 als auch für das Fenster 8 wird beispielsweise Stahl, vorzugsweise Edelstahl verwendet. Auch für den Schalltrichter 6 wird Stahl, vorzugsweise Edelstahl verwendet, so daß es am Übergang vom Schalltrichter 6 zum Fenster 8 nur zu geringen oder zu keinen Schallreflexionen kommt.

**Patentansprüche**

1. Sende- und/oder Empfangskopf eines Ultraschall-Durchflußmeßgerätes für strömende Medien (2), das nach dem Laufzeit-Verfahren arbeitet, mit einem Gehäuse (4), mit einem Ultraschallsignale in das strömende Medium (2) aussendenden und/oder aus dem strömenden Medium (2) empfangenden Ultraschalltransducer (5) und mit einem Ultraschallwellenleiter, wobei die Ultraschallsignale über den Ultraschallwellenleiter in das strömende Medium (2) eingekoppelt und/oder aus dem strömenden Medium ausgekoppelt werden, **dadurch gekennzeichnet, daß** als Ultraschallwellenleiter ein länglicher Schalltrichter (6) mit einem großen Wärmeleitwiderstand vorgesehen ist, daß dem Schaltrichter (6) zumindest teilweise ein vorzugsweise kreiszylindrischer Trichtermantel (7) zugeordnet ist und daß im Trichtermantel (7) eine eine Dissipation der reflektierten Ultraschallwellen im Trichtermantel (7) bewirkende Dämpfung (10) vorgesehen ist.

2. Sende- und/oder Empfangskopf nach Anspruch 1, **dadurch gekennzeichnet, daß** der Schalltrichter (6) und vorzugsweise auch der Trichtermantel (7) an dem dem strömenden Medium (2) zugewandten Ende mit einem Fenster (8) abgeschlossen ist bzw. sind.

3. Sende- und/oder Empfangskopf nach Anspruch 2, **dadurch gekennzeichnet, daß** das Ende des Schalltrichters (6) in der Mitte des Fensters (8) angeordnet ist und der Durchmesser und die Dicke des Fensters (8) so dimensioniert sind, daß eine möglichst große Schwingungsamplitude des Fensters (8) erreichbar ist.

4. Sende- und/oder Empfangskopf nach einem der Ansprüche 1 bis 3, **dadurch gekennzeichnet, daß** sich die Dämpfung (10) zumindest im wesentlichen über die gesamte Länge des Trichtermantels (7) erstreckt und vorzugsweise mit dem Trichtermantel (7) verbunden ist.

5. Sende- und/oder Empfangskopf nach einem der Ansprüche 1 bis 4, **dadurch gekennzeichnet, daß** der Dämpfung (10) fensterseitig eine Impedanzanpassung (11) vorgeschaltet ist.

6. Sende- und/oder Empfangskopf nach Anspruch 5, **dadurch gekennzeichnet, daß** die Impedanzanpassung (11) aus demselben Material wie die Dämpfung (10) besteht.

7. Sende- und/oder Empfangskopf nach einem der Ansprüche 1 bis 6, **dadurch gekennzeichnet, daß** als Dämpfung (10) und/oder als Impedanzanpassung (11) gesintertes oder poröses Material mit großer Körnung vorgesehen ist.

8. Sende- und/oder Empfangskopf nach Anspruch 7, **dadurch gekennzeichnet, daß** als Dämpfung (10) und/oder als Impedanzanpassung (11) Bronzesand oder Sinterbronze mit einer Korngröße von 10 $\mu$m bis 10 mm vorgesehen ist.

9. Sende- und/oder Empfangskopf nach einem der Ansprüche 1 bis 8, **dadurch gekennzeichnet, daß** der Ultraschalltransducer (5) einen Piezokristall (12) aufweist und die zugeordnete Querschnittsfläche des Schalltrichters (6) der Querschnittsfläche des Piezokristalls (12) entspricht.

10. Sende- und/oder Empfangskopf nach einem der Ansprüche 1 bis 9, **dadurch gekennzeichnet, daß** der Ultraschalltransducer (5) von dem Trichtermantel (7) akustisch entkoppelt ist.

11. Ultraschall-Durchflußmeßgerät mit zwei Sende- und/oder Empfangsköpfen (1) nach einem der Ansprüche 1 bis 10 und mit einer Steuer- und Auswerteschaltung, die die Laufzeit der Ultraschallsignale zur Bestimmung des Volumendurchflusses mißt, wobei die Steuer- und Auswerteschaltung so eingerichtet ist, daß sie anhand der Differenz zwischen der Gesamtlaufzeit der Ultraschallsignale zwischen den Ultraschalltransducern und der Summe der Laufzeiten der Ultraschallsignale in den Schalltrichtern den Volumendurchfluß bestimmt.

**Claims**

1. A transmitting and/or receiving head for an ultrasonic flow meter for moving media (2) that uses the transit time technique, with a housing (4), an ultrasonic transducer (5) that transmits ultrasound signals into the moving medium (2) and/or receives ultrasound signals from the moving medium (2) and an ultrasound waveguide, wherein the ultrasound signals are injected into the moving medium (2) via the ultrasound waveguide and/or decoupled from the moving medium, **characterised in that** an elongated sonic funnel (6) with a low thermal conductivity is provided as the ultrasound waveguide, the sonic funnel (6) is at least partly assigned a preferably circular-cylindrical funnel casing (7) and an attenuator (10) causing dissipation of the reflected ultrasound waves in the funnel casing (7) is provided in said funnel casing (7).

2. The transmitting and/or receiving head according to claim 1, **characterised in that** the sonic funnel (6) and preferably also the funnel casing (7) is or are closed off with a window (8) at the end facing the moving medium (2).

3. The transmitting and/or receiving head according to claim 2, **characterised in that** the end of the sonic funnel (6) is disposed in the centre of the window (8) and the diameter and thickness of the window (8) are of such dimensions as to maximise the oscillation amplitude of the window (8).

4. The transmitting and/or receiving head according to claims 1 to 3, **characterised in that** the attenuator (10) extends at least essentially over the entire length of the funnel casing (7) and is preferably connected to the funnel casing (7).

5. The transmitting and/or receiving head according to claims 1 to 4, **characterised in that** upstream of the attenuator (10) at the window end is an impedance matching mechanism (11).

6. The transmitting and/or receiving head according to claim 5, **characterised in that** the impedance matching mechanism (11) is made from the same material as the attenuator (10).

7. The transmitting and/or receiving head according to claims 1 to 6, **characterised in that** sintered or porous, large-grained material is used for the attenuator (10) and/or the impedance matching mechanism (11).

8. The transmitting and/or receiving head according to claim 7, **characterised in that** granular or sintered bronze with a grain size of between 10 $\mu$m and 10 mm is used for the attenuator (10) and/or impedance matching mechanism (11).

9. The transmitting and/or receiving head according to claims 1 to 8, **characterised in that** the ultrasonic transducer (5) has a piezoelectric crystal element (12) and the assigned cross-sectional area of the sonic funnel (6) matches the cross-sectional area of the piezoelectric crystal element (12).

10. The transmitting and/or receiving head according to one of the claims 1 to 9, **characterised in that** the ultrasonic transducer (5) is acoustically decoupled from the funnel casing (7).

11. An ultrasonic flow meter with two transmitting and/or receiving heads (1) according to one of the claims 1 to 10 and with a control and analysis circuit, which measures the transit time of the ultrasound signals to determine the volumetric flow, wherein the control and analysis circuit is set up in such a way that it determines the volumetric flow based on the difference between the total transit time of the ultrasound signals between the ultrasonic transducers and the total transmit times of the ultrasound signals in the sonic funnels.

**Revendications**

1. Tête d'émission et/ou de réception d'un appareil de mesure de débit à ultrasons pour milieux s'écoulant (2), qui fonctionne selon le procédé du temps de propagation avec un boîtier (4), avec un transducteur à ultrasons (5) recevant des signaux ultrasonores émis dans le milieu (2) s'écoulant et/ou du milieu (2) s'écoulant et avec un guide d'ondes ultrasonores, pour laquelle les signaux ultrasonores sont couplés par le guide d'ondes ultrasonores dans le milieu (2) s'écoulant et/ou découplés du milieu s'écoulant **caractérisée en ce qu'**un pavillon (6) longitudinal est muni d'une grande résistance thermoconductrice, **en ce qu'**au moins une enveloppe de pavillon (7) de préférence cylindrique circulaire est partiellement attribuée au pavillon (6) et **en ce que** dans l'enveloppe de pavillon (7) un amortissement (10) causant une dissipation des ondes ultrasonores réfléchies dans l'enveloppe de pavillon (7) est prévu.

2. Tête d'émission et/ou de réception selon la revendication 1 **caractérisée en ce que** le pavillon (6) et de préférence également l'enveloppe de pavillon (7) est et sont fermés par une fenêtre (8) à l'extrémité orientée vers le milieu (2) s'écoulant.

3. Tête d'émission et/ou de réception selon la revendication 2 **caractérisée en ce que** l'extrémité du pavillon (6) est disposée au centre de la fenêtre (8) et que le diamètre et l'épaisseur de la fenêtre (8) sont dimensionnés de telle sorte qu'une amplitude de vibrations la plus grande possible de la fenêtre (8) puisse être obtenue.

4. Tête d'émission et/ou de réception selon les revendications 1 à 3 **caractérisée en ce que** l'amortissement (10) s'étend au moins pour l'essentiel sur toute la longueur de l'enveloppe de pavillon (7) et est reliée de préférence à l'enveloppe de pavillon (7).

5. Tête d'émission et/ou de réception selon les revendications 1 à 4 **caractérisée en ce qu'**une adaptation d'impédance (11) est connectée côté fenêtre en amont de l'amortissement (10).

6. Tête d'émission et/ou de réception selon la revendication 5 **caractérisée en ce que** l'adaptation d'impédance (11) est du même matériau que l'amortissement (10).

**7.** Tête d'émission et/ou de réception selon les revendications 1 à 6 **caractérisée en ce qu'**un matériau fritté ou poreux d'une importante granulométrie est prévu comme amortissement (10 et/ou comme adaptation d'impédance (11).

**8.** Tête d'émission et/ou de réception selon la revendication 7 **caractérisée en ce que** de la poudre de bronze ou du bronze fritté d'une granulométrie de 10 $\mu$m à 10 mm sont prévus comme amortissement (10) et/ou comme adaptation d'impédance (11).

**9.** Tête d'émission et/ou de réception selon les revendications 1 à 8 **caractérisée en ce que** le transducteur à ultrasons (5) présente un cristal piézoélectrique (12) et **en ce que** la surface de section attribuée du pavillon (6)correspond à la surface de section du cristal piézoélectrique (12).

**10.** Tête d'émission et/ou de réception selon les revendications 1 à 9 **caractérisée en ce que** le transducteur à ultrasons (5) est découplé de manière acoustique du pavillon (7).

**11.** Appareil de mesure du débit à ultrasons avec deux têtes d'émission et/ou de réception (1) selon une des revendications 1 à 10 et avec un circuit de commande et d'analyse qui mesure le temps de transmission des signaux ultrasonores pour déterminer le débit de volume, pour lequel le circuit de commande et d'analyse est conçu de telle sorte qu'il détermine le débit de volume à l'aide de la différence entre le temps de transmission total des signaux ultrasonores entre les transducteurs à ultrasons et la somme des temps de transmission des signaux ultrasonores dans les pavillons.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 61093914 A
- DE 19530807
- DE 19633558
- DE 19648784